Europäisches Patentamt

European Patent Office

Office européen des brevets

(11) Veröffentlichungsnummer: **0 156 951**
**B1**

(12) **EUROPÄISCHE PATENTSCHRIFT**

(45) Veröffentlichungstag der Patentschrifft:
17.01.90

(21) Anmeldenummer: 84112002.5

(22) Anmeldetag: 06.10.84

(51) Int. Cl. ⁴: **F 04 C 27/00,** F 04 C 29/02

(54) Zweiwellen-Vakuumpumpe mit Getrieberaum-Evakuierung.

(30) Priorität: **13.12.83 DE 3344953**

(43) Veröffentlichungstag der Anmeldung:
09.10.85 Patentblatt 85/41

(45) Bekanntmachung des Hinweises auf die Patenterteilung:
17.01.90 Patentblatt 90/03

㉞ Bennante Vertragsstaaten:
AT BE CH DE FR GB IT LI LU NL

(56) Entgegenhaltungen:
CH-A-445 709
DE-A-2 450 598
DE-A-3 047 699
DE-B-1 939 717
GB-A-224 013

(73) Patentinhaber: **LEYBOLD AKTIENGESELLSCHAFT**
**Bonner Strasse 498**
**D-5000 Köln 51 (DE)**

(72) Erfinder: **Frieden, Peter**
**Hauffstrasse 13**
**D-5000 Köln 30 (DE)**
Erfinder: **Kabelitz, Hans-Peter, Dr.**
**Siebengebirgsallee 5a**
**D-5000 Köln 90 (DE)**
Erfinder: **Ronthaler, Karl-Heinz**
**Frankengraben 8**
**D-5352 Zülpich (DE)**
Erfinder: **Thielicke, Jörg**
**Tucholskystrasse 16**
**D-5000 Köln 30 (DE)**

(74) Vertreter: **Leineweber, Jürgen, Dipl.-Phys.**
**Nagelschmiedshütte 8**
**D-5000 Köln 40 (DE)**

EP 0 156 951 B1

LIBERGRAF, STOCKHOLM 1990

## Beschreibung

Die Erfindung bezieht sich auf eine Zweiwellen-Vakuumpumpe mit einem Schöpfraum und mindestens einem seitlich davon angeordneten, Öl enthaltenden, mit einer Evakuierungseinrichtung verbundenen Getrieberaum, mit einer zwischen dem Schöpfraum und dem Getrieberaum befindlichen Trennwand mit Lagerungen für die Wellen der im Schöpfraum befindlichen Wälzkolben, mit den die Trennwand durchsetzenden Wellen zugeordneten Labyrinthdichtungen zwischen Schöpfraum und Getrieberaum und mit Mitteln zur Vermeidung eines Ölmangels oder Ölverlustes im Getrieberaum infolge der Getrieberaumevakuierung.

Eine typische Vertreterin der Zweiwellen-Vakuumpumpen ist die Wälzkolben-Vakuumpumpe, wie sie z. B. aus der DE-PS-1 939 717 bekannt ist. Sie umfaßt einen zentralen Schöpfraum mit den beiden aufeinander abwälzenden Kolben. In seitlichen Trennwänden sind die Wellen der Kolben derart gelagert, daß sie in seitlich angeordnete Getrieberäume hineinragen. Dort sind die Wellen mit miteinander in Eingriff stehenden Zahnrädern ausgerüstet, die die richtige Position der Kolben zueinander sicherstellen. Eine der Wellen ist mit der Welle eines Antriebsmotors gekuppelt. In der Regel sind Wälzkolbenpumpen in der beschriebenen Weise mit zwei Getrieberäumen ausgerüstet; im Falle einer fliegenden Lagerung der Kolben ist jedoch nur ein Getrieberaum erforderlich.

In den kommunizierend miteinander verbundenden, seitlich vom Schöpfraum angeordneten Getrieberäumen der Wälzkolbenpumpe nach der DE-PS-1 939 717 befindet sich Öl, das der Schmierung der Zahnräder und der Wellenlagerungen dient. Um zu verhindern, daß dieses Öl oder Öldämpfe in den Schöpfraum gelangen, sind den Wellen im Bereich der Trennwände Dichtungen zugeordnet. Diese können von Simmerringen gebildet werden, die den Nachteil eines Verschleißes und damit einer begrenzten Lebensdauer haben. Anstelle der Simmerringe sind deshalb auch verschleißfreie Labyrinthdichtungen bekannt.

Zweiwellen-, insbesondere Wälzkolben-Vakuumpumpen, werden häufig dort eingesetzt, wo eine absolut ölfreie Evakuierung oder Gasförderung sichergestellt sein muß. Um diese Forderung zu erfüllen und gleichzeitig verschleißfreie Labyrinth-Dichtungen verwenden zu können, hat man bereits vorgeschlagen, die Getrieberäume auf einen Druck zu evakuieren und auf diesem Druck zu halten, der kleiner als der niedrigste im Schöpfraum vorkommende Druck ist. Dadurch entsteht im Bereich der Labyrinth-Dichtung eine Gasströmung vom Schöpfraum in den Getrieberaum, die verhindert, daß Öl in entgegengesetzter Richtung vordringen kann. Diese Abdichtung ist um so besser, je höher der Volumenstrom durch die Labyrinthdichtung ist.

Da in den Getrieberäumen das Öl mit Hilfe einer Spritzscheibe umgeschleudert wird, um die Zahnräder um die Lager ausreichend mit Schmieröl zu versorgen, reichert sich das abgesaugte Gas stark mit Öl an. Insbesondere dann, wenn ein hoher Volumenstrom im Bereich der Labyrinthdichtungen durch eine Evakuierung der Getrieberäume mit hohem Saugvermögen erreicht werden soll, kann so viel Öl aus dem Getrieberaum mitgerissen werden, daß der Ölstand unter den unteren Grenzwert sinkt. Damit ist die ausreichende Schmierung von Zahnung und Lagern nicht mehr gewährleistet.

Aus der DE-A-3 047 699 ist eine Zweiwellenvakuumpumpe der eingangs genannten Art bekannt. Diese weist zwischen dem Schöpfraum und den Getrieberäumen Druckausgleichsräume auf, die evakuiert werden. Zwei Varianten der Evakuierung sind offenbart. Zum einen können gesonderte Leitungen (und offensichtlich eine separate Vakuumpumpe) vorgesehen sein; zum anderen sind geeignete Verbindungsleitungen (in der Figur dargestellte Version) vorgesehen, die die Druckausgleichskammern mit dem Schöpfraum der Vakuumpumpe verbinden. In diesem Fall ist eine Zeolithfalle (14) unbedingt erforderlich, daß sonst die aus den Druckausgleichskammern evakuierten Öldämpfe in den Schöpfraum gelangen, also gerade dorthin, wo sie nicht sein sollen. Die Druckausgleichskammern stehen über Bohrungen mit den Getrieberäumen in Verbindung, um einen Druckausgleich zu bewirken. Jeder Bohrung ist ein Ölfilter (8) zugeordnet. Während des Betriebs dieser Wälzkolbenpumpe werden Gase sowohl aus dem Schöpfraum als auch den den Getrieberäumen über die Labyrinthdichtungen und durch die Druckausgleichskammern abgesaugt. Derjenige Gasstrom, der aus den Getrieberäumen über die Labyrinthdichtungen in die Druckausgleichskammern gelangt, durchströmt nicht die Ölfilter (8). Diese sind lediglich den Druckausgleichsbohrungen zugeordnet, durch die nur ein Teilstrom der mit Öldampf beladenen Gase strömt. Auch bei dieser vorbekannten Pumpe führen die noch durch die Filter (8) strömenden, mit Öl beladenen Gase, welche sich bei Variante 1 in der Zeolithfalle (14) anlagern, und bei Variante 2 in die Vakuumpumpe gelangen, zu einer unerwünschten Verminderung des Ölstandes in den Getrieberäumen.

Aus der DE-A-2 450 598 ist eine Zweiwellenvakuumpumpe bekannt, bei der vom Schöpfraum zu den Getrieberäumen durchströmte Labyrinthdichtungen nicht vorgesehen sind. Die Getrieberäume sind über mit Öldampffallen ausgerüstete Leitungen mit dem Schöpfraum verbunden. Das in den Fallen adsorbierte Öl führt ebenfalls zu einer Verminderung des Ölstandes in den Getrieberäumen.

Schließlich ist noch aus der GB-A-224 013 die Verwendung von Schwimmerregelungen bei Maschinen-Schmiersystemen bekannt.

Der vorliegenden Erfindung liegt die Aufgabe zugrunde, eine Zweiwellen-, vorzugsweise Wälzkolben-Vakuumpumpe der eingangs genannten Art, d. h. eine Zweiwellen-Vakuumpumpe mit Getrieberaum-Evakuierung und Labyrinthdichtung, so betriebssicher zu gestalten, daß einerseits ein großer Volumenstrom durch die Labyrinth-Dichtung aufrechterhalten werden kann und daß andererseits die Gefahr eines unzulässigen Ölmangels im Getrieberaum nicht mehr besteht.

Erfindungsgemäß wird diese Aufgabe dadurch gelöst, daß die Evakuierungseinrichtung für den Getrieberaum eine separate Vakuumpumpe ist, die einen Druck zu erzeugen vermag, der kleiner als der niedrigste im Schöpfraum der Zweiwellen-Vakuumpumpe vorkommende Druck ist und deren Einlaß über die Leitung unmittelbar mit dem Getrieberaum verbunden ist, daß für die durch die Leitung vom Getrieberaum zur Vakuumpumpe strömenden Gase in der Leitung ein Ölabscheideelement vorgesehen ist und daß der Ölsammelraum hinter dem Filter des Ölabscheideelements über eine Leitung mit dem Getrieberaum zwecks Rückführung des abgeschiedenen Öls in Verbindung steht.

Weitere Vorteile und Einzelheiten der Erfindung in den Ölvorrat der ölgedichteten Vakuumpumpe und wird von dort aus dem Getrieberaum zurückgeführt.

Schließlich bestehen vorteilhafte Maßnahmen darin, in der Trennwand zwischen den Lagerungen und den Labyrinthdichtungen einen Öl-Beruhigsraum anzuordnen und die der Evakuierung des Getrieberaumes dienende Vakuumpumpe an diesen Beruhigungsraum anzuschließen. Diese Maßnahmen bewirken bereits allein, daß nur noch äußerst wenig Öldämpfe aus dem Getrieberaum in die Vakuumpumpe gelangen, während die gerichtete Strömung in den Labyrinthdichtungen sicher aufrechterhalten werden kann. Werden zusätzlich die vorbeschriebenen Maßnahmen ergriffen, dann ist die Gefahr eines Ölmangels nahezu ausgeschlossen.

Weitere Vorteile und Einzelheiten der Erfindung sollen anhand der Figuren 1 bis 5 erläutert werden. Es zeigen:

Fig. 1 bis 3 Lösungen mit in der Verbindungsleitung zwischen Getrieberaum und Vakuumpumpe befindlichen Abscheideelementen,

Fig. 4 eine Lösung, bei der der Ölvorrat im Getrieberaum mit dem Ölvorrat der der Getrieberaum-Evakuierung dienenden Vakuumpumpe in Verbindung steht.

In allen Figuren ist jeweils ein Teil einer Wälzkolbenpumpe 1 dargestellt. Die zwischen dem Schöpfraum 2 und dem Getrieberaum 3 befindliche Trennwand ist mit 4 bezeichnet. In der Trennwand 4 sind die Wellenstümpfe 5 der nicht dargestellten Wälzkolben mittels Wälzlagern 6 gelagert. Auf den freien Enden der Wellenstümpfe 5 befinden sich in Eingriff stehende Zahnräder 7. Außerdem ist auf dem Wellenstumpf 5 eine Spritzscheibe 8 angeordnet, die bis unterhalb des Ölspiegels 9 des im Getrieberaum 3 befindlichen Schmieröls 11 reicht. Die Rotation der Spritzscheibe 8 bewirkt die ausreichende Schmierung sowohl der Zahnräder 7 als auch der Wälzlager 6.

Der Welle 5 ist im Bereich der Trennwand 4 eine generell mit 12 bezeichnete Labyrinth-Dichtung zugeordnet. Um zu verhindern, daß mit Öl angereicherte Luft vom Getrieberaum 3 in den Schöpfraum 2 dringt, ist es bekannt, den Getrieberaum 3 direkt mit einer Vakuumpumpe zu verbinden. Dadurch wird im Bereich der Labyrinth-Dichtung eine Gasströmung vom Schöpfraum 2 in den Getrieberaum 3 aufrechterhalten und damit das Strömen von mit Öl angereicherter Luft in umgekehrter Richtung verhindert.

Infolge der gewählten Darstellungsform sind nur ein Wellenstumpf 5, ein Zahnrad 7, ein Wälzlager 6 und eine Labyrinth-Dichtung 12 sichtbar. Auch auf die Darstellung eines zweiten, auf der anderen Seite des Schöpfraumes 2 gelegenen, vorzugsweise mit dem dargestellten Getrieberaum 3 in kommunizierender Verbindung stehenden Getrieberaums wurde verzichtet. Über diesen zweiten nicht dargestellten Getrieberaum erfolgt in bekannter Weise der Antrieb der Kolben.

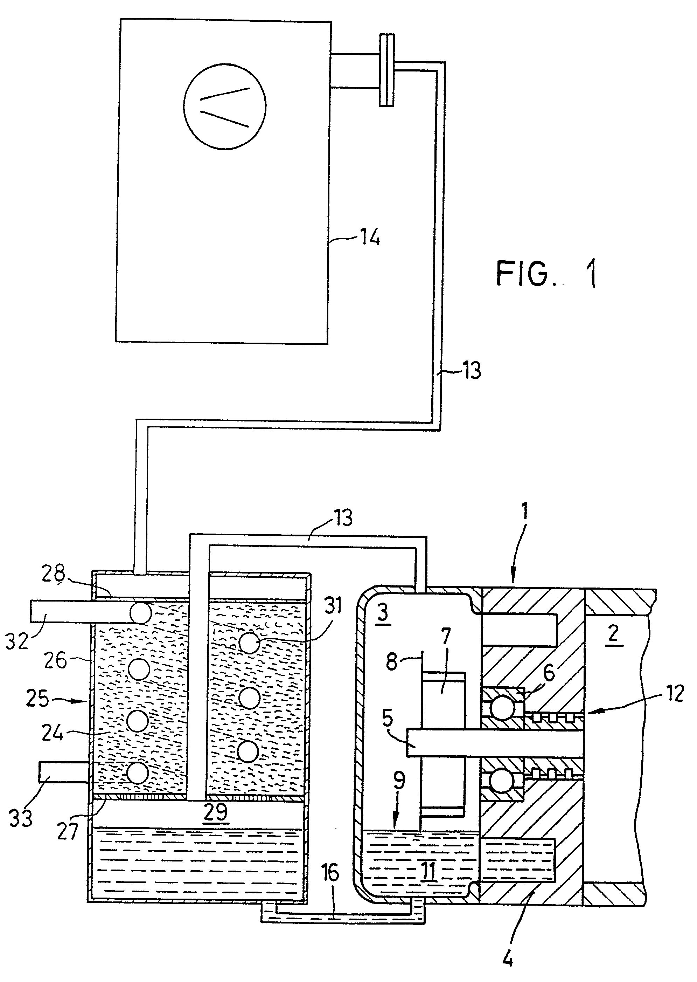

Beim Ausführungsbeispiel nach Fig. 1 ist in die vom Getrieberaum 3 zur Vakuumpumpe 14 führende Leitung ein Ölabscheideelement 25 eingeschaltet. Dieses besteht aus dem Gehäuse 26, das zwischen zwei gasdurchlässigen Böden 27 und 28 mit Filtermaterial 24, vorzugsweise Metallwolle, gefüllt ist. Die mit Öl angereicherte Luft wird durch dieses Filtermaterial zur Vakuumpumpe 14 hin abgesaugt. Das im Filtermaterial 24 abgeschiedene Öl gelangt in den unterhalb des Filtermaterials befindlichen Ölsammelraum 29. Von diesem wird es über die Anschlußleitung 16 in den Getrieberaum 3 zurückgeführt. Die Anordnung der Leitung 16 ist bei diesem Ausführungsbeispiel so getroffen, daß die Rückführung des Öls in den Ölsumpf der Wälzkolbenpumpe erfolgt.

Eine Schwimmerregelung ist bei diesem Ausführungsbeispiel nicht erforderlich, da ein unzulässiger Anstieg des Ölstandes 9 im Getrieberaum 3 durch Fremdöl nicht möglich ist. Durch die Anordnung muß nur sichergestellt sein, daß das im Filtermaterial 24 abgeschiedene Öl in den Getrieberaum 3 zurückströmt. Zur Verbesserung der Abscheidung kann eine Wasserkühlung für das Filtermaterial vorgesehen sein, z. B. eine das Filtermaterial durchsetzende, wasserdurchströmte Rohrschlange 31. Zulauf- und Ablaufstutzen sind mit 32 und 33 bezeichnet.

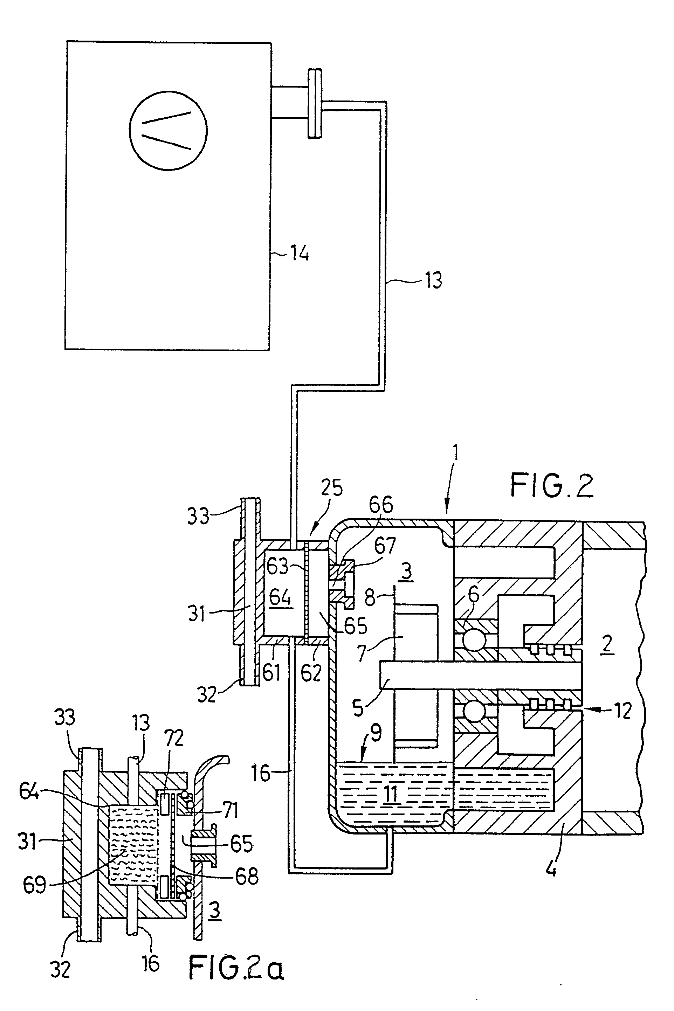

Das Ausführungsbeispiel nach Fig. 2 erlaubt eine Grobabscheidung des mitgerissenen Öls. Die Abscheidewirkung wird zwar durch die Baffle-Wirkung infolge der Wasserkühlung verbessert; eine nahezu vollständige Abscheidung des mitgerissenen Öldampfes ist aber dennoch nicht möglich.

Beim Ausführungsbeispiel nach Fig. 2 ist das Ölabscheideelement 25 unmittelbar am Getrieberaum 3 oberhalb des Ölstandes 9 befestigt. Es ist als kappenförmiger Ansatz ausgebildet und umfaßt die Kappe 61 und den ringförmigen Abschnitt 62. Zwischen diesen Bauteilen ist ein mehrlagiges Drahtgewebe 63 als Ölfilter eingespannt. Dadurch entstehen im Ölabscheideelement 25 zwei Räume 64 und 65, von denen der Raum 65 über die Bohrung 66 unmittelbar mit dem Getrieberaum 3 in Verbindung steht. Die Bohrung 66 ist getrieberaumseitig mit einem Kragen 67 ausgerüstet, welcher die Bohrung 66 gegen Spritzöl abschirmt. An den Raum 64 ist die Leitung 13 angeschlossen, die zur Vakuumpumpe 14 führt. Im unteren Bereich ist an den Raum 64 die Ölrückführungsleitung 16 angeschlossen, die im Ölsumpf 11 mündet.

Fig. 2a zeigt eine der Fig. 2 ähnliche Lösung mit einer gestuften Ölabscheidung in zwei hintereinander angeordneten Abscheideelementen 68 und 69. Die erste Abscheidestufe bildet ein Tröpfchenfilter 68, bestehend aus mehreren Lagen eines Metallgewebes (vorzugsweise Edelstahlgewebes) mit einer Mascheinweite von etwa 50 u. Es ist – im Gegensatz zur Fig. 2 – über den metallischen Ring 71 gut wärmeleitend mit dem Gehäuse des Getrieberaumes verbunden, damit das Öl im Gewebefilter nicht zu zäh wird und diesen verstopft. In dem sich daran – in Strömungsrichtung – anschließenden Raum 65 ist Metallwolle 69 angeordnet, die die Funktion eines Nebelabscheiders hat, dessen Wirkung durch die Kühlung 31 erhöht wird. Der Ring 72 besteht aus einem schlecht wärmeleitenden Werkstoff, so daß Kälteverluste gering bleiben und eine Abkühlung des Gewebes 68 vermieden ist.

Zur Verbesserung der Abscheidewirkung ist die Kappe 61 mit einer Wasserkühlung 31 ausgerüstet. Der Wasserzu- und -ablauf sind mit 32 und 33 bezeichnet. Die Kappe 61 besteht zweckmäßigerweise aus einem Werkstoff mit hoher Wärmeleitfähigkeit, z. B. Aluminium, damit das Drahtgewebe 63 ebenfalls eine niedrige Temperatur annimmt. Der ringförmige Abschnitt 62 des Ölabscheideelementes 25 besteht zweckmäßigerweise aus einem Material mit niedriger Wärmeleitfähigkeit, damit ein Wärmeübergang vom Pumpengehäuse auf das Drahtgewebe 63 möglichst verhindert ist.

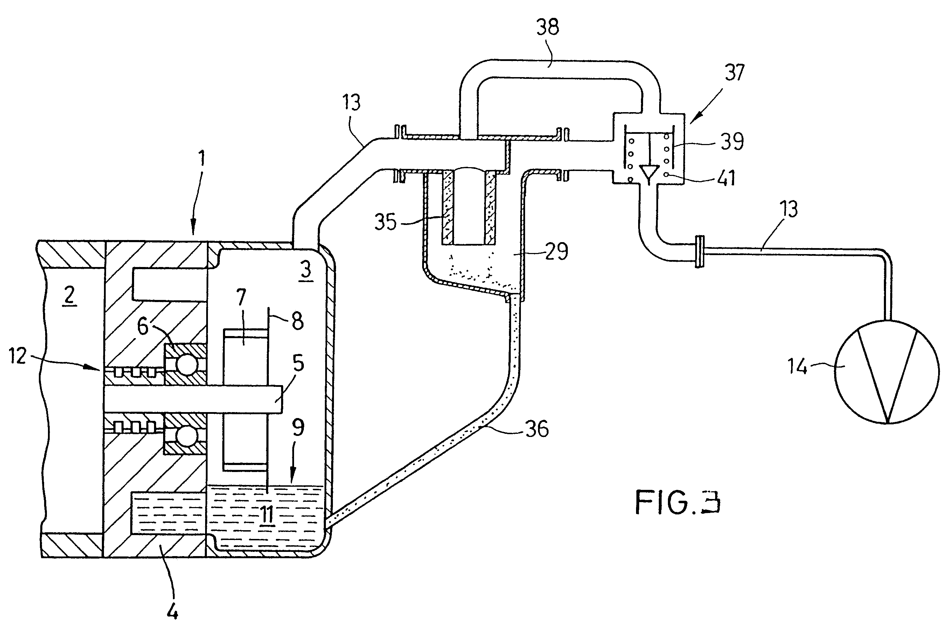

Eine wesentliche Verbesserung der Abscheidewirkung kann dadurch erzielt werden, daß in die vom Getrieberaum 3 zur Vakuumpumpe 14 führende Leitung 13 ein Ölnebelfilter 35 eingesetzt wird (vgl. Fig. 3). Dabei kann es sich z. B. um eine von innen nach außen durchströmte Filterpatrone handeln, deren Filtermaterial z. B. aus Glasfasern mit Epoxyharz besteht. Die Lösung nach Fig. 3 erlaubt eine Feinabscheidung, also eine nahezu vollständige Abscheidung und Rückführung des mitgerissenen Öls, so daß die Gefahr eines Ölmangels im Getrieberaum 3 nicht mehr besteht. Da Filterelemente mit Feinabscheidungseigenschaften einen Durchflußwiderstand haben, wird sich während des Betriebs im Ölsammelraum 29 ein Druck ps einstellen, der kleiner ist als der Druck pg im Getrieberaum 3. Es müssen deshalb besondere Maßnahmen getroffen werden, die sicherstellen, daß das abgeschiedene Öl aus dem Ölsammelraum 29 in den Getrieberaum 3 durch die Leitung 36 zurückströmt. Diese Rückströmung ist sichergestellt, wenn zum einen die Rückführungsleitung 36 unterhalb des Ölspiegels 9 in den Getrieberaum 3 mündet und zum anderen die Lage des Ölsammelraums 29 in bezug auf den Ölstand 9 im Getrieberaum 3 so hoch gewählt ist, daß die infolge des Durchflußwiderstandes des Ölfilters 35 aufgebaute Druckdifferenz pg – ps kleiner ist als die barometrische Förderdruckdifferenz, die von der Höhe des Ölsammelraums 29 über dem Ölstand 9 abhängt. Im Falle umgekehrter Druckverhältnisse würde Öl aus dem Getrieberaum in den Ölsammelraum 29 gesaugt und der Ölstand im Getrieberaum unzulässig abgesenkt.

Damit die Druckdifferenz zwischen dem Druck pg im Getrieberaum 3 und dem Druck ps im Ölsammelraum 29 begrenzt bleibt, ist es zweckmäßig, dem Ölnebelfilter 35 ein Druckregelventil 37 nachzuschalten, dessen Betätigungskolben 39 auf der einen Seite mit dem Druck pg des Getrieberaums (über die Leitung 38) und auf der anderen Seite mit dem Druck ps im Ölsammelraum 29 beaufschlagt ist. Der Betätigungskolben 39 steht außerdem unter der Wirkung einer Feder 41, die das Kolbengewicht ausgleicht und bestimmt, bei welcher Druckdifferenz das Ventil eine bestimmte Öffnungsstellung einnimmt.

Ein in dieser Weise ausgebildetes Regelventil 37 sorgt dafür, daß über dem Ölfilter 35 mit guter Näherung eine konstante Druckdifferenz aufgebaut wird. Da Ölnebelfilter im Regelfall laminar durchströmt werden, ist die am Filter aufgebaute Druckdifferenz dem Volumenstrom proportional. Man erreicht also durch die beschriebene Regelung der Druckdifferenz gleichzeitig eine Regelung des Volumenstromes in dem Sinne, daß der Volumenstrom ebenfalls annähernd konstant gehalten wird.

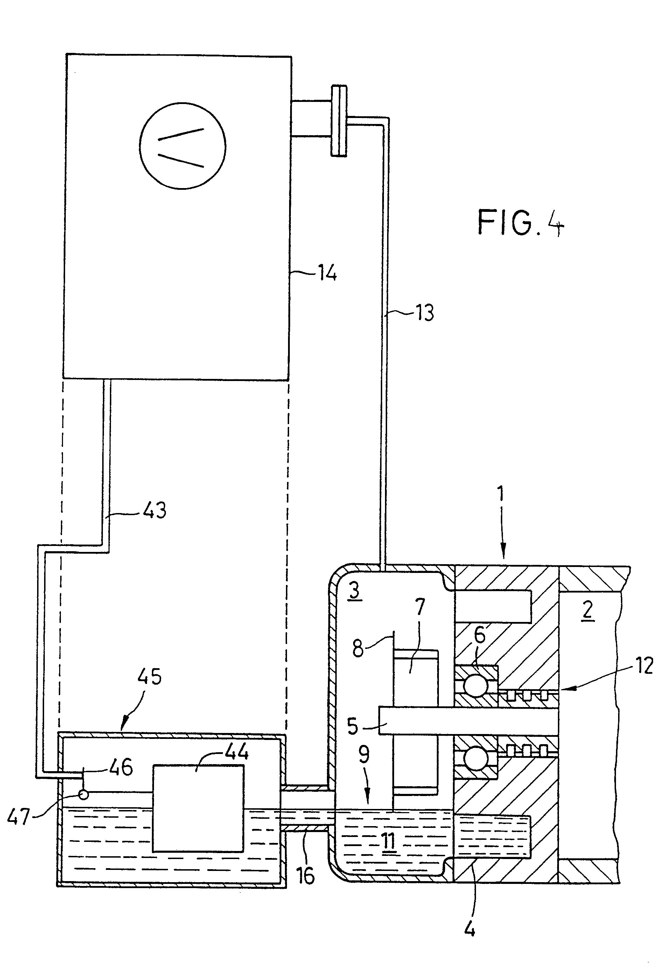

Beim Ausführungsbeispiel nach Fig. 4 ist die den Getrieberaum 3 über die Leitung 13 evakuierende Vakuumpumpe 14 eine ölgedichtete Vakuumpumpe mit einem darin befindlichen Ölvorratsraum. Das aus dem Getrieberaum 3 gerissene Öl gelangt bei dieser Ausführungsform in den Ölvorrat der Vakuumpumpe 14. Von dort aus wird es über die Leitung 43 einem Gefäß 45 zugeführt, das über die Anschlußleitung 16 mit dem Getrieberaum 3 in Verbindung steht. Das Gefäß 45 und die Anschlußleitung 16 sind in Höhe des Ölstandes 9 im Getrieberaum 3 angeordnet. Die Niveauregelung erfolgt wieder mit Hilfe eines Schwimmers 44, der mit seinem Verschlußglied 46 um die Achse 47 schwenkbar ist. Das Verschlußglied 46 regelt den Ölzufluß aus der Mündung der Zuführungsleitung 43.

Die Zuführungsleitung 43 und das zusätzliche Gefäß 45 könnten entfallen, wenn die Vakuumpumpe 14 derart neben der Wälzkolbenpumpe 1 angeordnet ist, daß die gewünschten Ölspiegel in den beiden Pumpen gleich hoch liegen.

Ölgedichtete Vakuumpumpen – hier die Vakuumpumpe 14 – können mit hochwirksamen Auspuff-Filtern ausgerüstet werden, die einen Ölaustritt aus dem System vermeiden. Es kann deshalb sichergestellt werden, daß das aus dem Getrieberaum 3 mitgerissene Öl stets wieder in den Getrieberaum 3 zurückgelangt.

## Patentansprüche

1. Zweiwellen-Vakuumpumpe (1) mit einem Schöpfraum (2) und mindestens einem seitlich davon angeordneten, Öl enthaltenden, mit einer Evakuierungseinrichtung verbundenen Getrieberaum (3), mit einer zwischen dem Schöpfraum und dem Getrieberaum befindlichen Trennwand (4) mit Lagerungen (6) für die Wellen (5) der im Schöpfraum befindlichen Wälzkolben, mit den die Trennwand durchsetzenden Wellen zugeordneten Labyrinthdichtungen (12) zwischen Schöpfraum und Getrieberaum und mit Mitteln zur Vermeidung eines Ölmangels oder Ölverlustes im Getrieberaum (3) infolge der Getrieberaumevakuierung, *dadurch gekennzeichnet*, daß die Evakuierungseinrichtung für den Getrieberaum (3) eine separate Vakuumpumpe (14) ist, die einen Druck zu erzeugen vermag, der kleiner als der niedrigste im Schöpfraum der Zweiwellen-Vakuumpumpe (1) vorkommende Druck ist und deren Einlaß über die Leitung (13) unmittelbar mit dem Getrieberaum (3) verbunden ist, daß für die durch die Leitung (13) vom Getrieberaum (3) zur Vakuumpumpe (14) strömende Gase in der Leitung (13) ein Ölabscheideelement (25, 35) vorgesehen ist und daß der Ölsammelraum hinter dem Filter des Ölabscheideelements über eine Leitung (16) mit dem Getrieberaum (3) zwecks Rückführung des abgeschiedenen Öls in Verbindung steht.

2. Pumpe nach Anspruch 1, *dadurch gekennzeichnet*, daß das Ölabscheideelement als mit Metallwolle (24) gefüllter Filter (25) ausgebildet ist.

3. Pumpe nach Anspruch 1, *dadurch gekennzeichnet*, daß das Ölabscheideelement (25) als kappenförmiger, am Getrieberaum (3) unmittelbar gehalterter Ansatz (61, 62) ausgebildet ist.

4. Pumpe nach Anspruch 3, *dadurch gekennzeichnet*, daß der Ansatz aus einem ringförmigen (62) und aus einem kappenförmigen (61) Bauteil besteht, zwischen denen ein mehrlagiges Drahtgewebe (63) als Ölfilter eingespannt ist.

5. Pumpe nach einem der vorhergehenden Ansprüche, *dadurch gekennzeichnet*, daß dem Ölabscheideelement (25, 35) eine Kühlung (31), vorzugsweise Wasserkühlung, zugeordnet ist.

6. Pumpe nach Anspruch 4 und 5, *dadurch gekennzeichnet*, daß die Wasserkühlung (31) der Kappe (61) zugeordnet ist und die Kappe (61) aus gutwärmeleitendem und der ringförmige Abschnitt (62) aus schlechtwärmeleitendem Werkstoff bestehen.

7. Pumpe nach Anspruch 1, *dadurch gekennzeichnet*, daß das Ölabscheideelement als Ölnebelfilter (35) ausgebildet ist.

8. Pumpe nach Anspruch 7, *dadurch gekennzeichnet*, daß die der Rückführung des Öls dienende Leitung (36) unterhalb des Ölspiegels (9) im Getrieberaum (3) mündet und daß der Ölsammelraum (29) des Ölnebelfilters (35) in bezug auf den Ölspiegel im Getrieberaum so hoch angeordnet ist, daß der Ölrückfluß sichergestellt ist.

9. Pumpe nach Anspruch 7 oder 8, *dadurch gekennzeichnet*, daß dem Ölnebelfilter (35) ein Druckregelventil (37) nachgeschaltet ist.

10. Pumpe nach einem der vorhergehenden Ansprüche, *dadurch gekennzeichnet*, daß zwei miteinander in Verbindung stehende Getrieberäume vorgesehen sind.

11. Zweiwellen-Vakuumpumpe (1) mit einem Schöpfraum (2) und mindestens einem seitlich davon angeordneten, Öl enthaltenden, mit einer Evakuierungseinrichtung verbundenen Getrieberaum (3), mit einer zwischen dem Schöpfraum und dem Getrieberaum befindlichen Trennwand (4) mit Lagerungen (6) für die Wellen (5) der im Schöpfraum befindlichen Wälzkolben, mit den die Trennwand durchsetzenden Wellen zugeordneten Labyrinthdichtungen (12) zwischen Schöpfraum und Getrieberaum und mit Mitteln zur Vermeidung eines Ölmangels oder Ölverlustes im Getrieberaum (3) infolge der Getrieberaumevakuierung, *dadurch gekennzeichnet*, daß die Evakuierungseinrichtung für den Getrieberaum (3) eine separate ölgedichtete Vakuumpumpe (14) ist, deren Einlaß über die Leitung (13) mit dem Getrieberaum (3) verbunden ist, und daß der Getrieberaum (3) mit dem Ölvorrat der separaten Vakuumpumpe (14) in Verbindung steht.

12. Pumpe nach Anspruch 11, *dadurch gekennzeichnet*, daß zur Regelung der Zufuhr des Öls vom Ölvorrat der separaten Vakuumpumpe (14) in den Getrieberaum (3) eine Schwimmerregelung (44, 46, 47) vorgesehen ist.

13. Pumpe nach Anspruch 11 oder 12, *dadurch gekennzeichnet*, daß der separaten ölgedichteten Vakuumpumpe (14) ein Auspufffilter zugeordnet ist.

## Revendications

1. Pompe à vide (1) à deux arbres, comportant: une chambre d'aspiration (2) et, agencée latéralement par rapport à celle-ci, au moins une chambre d'engrenage (3) contenant de l'huile et reliée à un dispositif de mise sous vide; une paroi séparatrice (4) située entre la chambre d'aspiration et la chambre d'engrenage; des paliers (6) pour les arbres (5) des pistons tournants se trouvant dans la chambre d'aspiration; des organes d'étanchéité à labyrinthe (12) associés aux arbres traversant la paroi séparatrice et situés entre chambre d'aspiration et chambre d'engrenage; et des moyens pour éviter un manque d'huile ou une perte d'huile dans la chambre d'engrenage (3) sous l'effet de la mise sous vide de la chambre d'engrenage, *caractérisée* par le fait que le dispositif de mise sous vide pour la chambre d'engrenage (3) est une pompe à vide séparée (14) qui peut engendrer une pression plus petite que la plus faible pression survenant dans la chambre d'aspiration de la pompe à vide à deux arbres (1), et dont l'entrée est directement reliée à la chambre d'engrenage (3) par la conduite (13), par le fait qu'un élément séparateur d'huile (25, 35) est prévu sur la conduite (13), pour les gaz s'écoulant par cette conduite (13) de la chambre d'engrenage (3) à la pompe à vide (14), et par le fait que la chambre collectrice d'huile derrière le filtre de l'élément séparateur d'huile est reliée, par une conduite (16), à la chambre d'engrenage (3), aux fins de retour de l'huile séparée.

2. Pompe selon revendication 1, *caractérisée* par le fait que l'élément séparateur d'huile est réalisé en tant que filtre (25) rempli de laine métallique (24).

3. Pompe selon revendication 1, *caractérisé* par le fait que l'élément séparateur d'huile (25) est réalisé en tant qu'embout (61, 62) en forme de coiffe maintenu directement sur la chambre d'engrenage (3).

4. Pompe selon revendication 3, *caractérisée* par le fait que l'embout est constitué par un composant annulaire (62) et par un composant en forme de coiffe (61), entre lesquels est enserré, en tant que filtre à huile, un tissu de fil en plusieurs couches (63).

5. Pompe selon l'une des revendications précédentes, *caractérisée* par le fait qu'un refroidissement (31), de préférence un refroidissement par eau, est associé à l'élément séparateur d'huile (25, 35).

6. Pompe selon revendications 4 et 5, *caractérisée* par le fait que le refroidissement par eau (31) est associé à la coiffe (61), et cette coiffe (61) est en matière conduisant bien la chaleur, tandis que la partie annulaire (62) est en matière conduisant mal la chaleur.

7. Pompe selon revendication 1, *caractérisée* par le fait que l'élément séparateur d'huile est réalisé en tant que filtre à brouillard d'huile (35).

8. Pompe selon revendication 7, *caractérisée* par le fait que la conduite (36) servant au retour de l'huile débouche en dessous du niveau (9) de l'huile dans la chambre d'engrenage (3), et par le fait que la chambre collectrice d'huile (29) du filtre à brouillard d'huile (35) est agencée, par rapport au niveau de l'huile dans la chambre d'engrenage, à une hauteur telle que le retour de l'huile soit assuré.

9. Pompe selon revendication 7 ou 8, *caractérisée* par le fait qu'une valve régulatrice de pression (37) est montée à la suite du filtre à brouillard d'huile (35).

10. Pompe selon l'une des revendications précédentes, *caractérisée* par le fait qu'il est prévu deux chambres d'engrenage communiquant l'une avec l'autre.

11. Pompe à vide (1) à deux arbres, comportant: une chambre d'aspiration (2) et, agencée latéralement par rapport à celle-ci, au moins une chambre d'engrenage (3) contenant de l'huile et reliée à un dispositif de mise sous vide; une paroi séparatrice (4) située entre la chambre d'aspiration et la chambre d'engrenage; des paliers (6) pour les arbres (5) des pistons tournants se trouvant dans la chambre d'aspiration; des organes d'étanchéité à labyrinthe (12) associés aux arbres traversant la paroi séparatrice et situés entre chambre d'aspiration et chambre d'engrenage; et des moyens pour éviter un manque d'huile ou une perte d'huile dans la chambre d'engrenage (3) sous l'effet de la mise sous vide de la chambre d'engrenage, *caractérisée* par le fait que le dispositif de mise sous vide pour la chambre d'engrenage (3) est une pompe à vide séparée (14), étanchée à l'huile, dont l'entrée est reliée à la chambre d'engrenage (3) par la conduite (13), et par le fait que la chambre d'engrenage (3) communique avec la réserve d'huile de la pompe à vide séparée (l4).

12. Pompe selon revendication 11, *caractérisée* par le fait qu'une régulation par flotteur (44, 46, 47) est prévue pour réguler l'amenée de l'huile de la réserve d'huile de la pompe à vide séparée (14), à la chambre d'engrenage (3).

13. Pompe selon revendication 11 ou 12, caractérisée par le fait qu'un filtre d'échappement est associé à la pompe à vide séparée (14), étanchée à l'huile.

## Claims

1. Twin shaft vacuum pump (1) with a compression chamber (2) and at least one gearing space (3) arranged to the side thereof, containing oil and linked to an evacuation device, with a dividing wall (4) between the compression chamber and the gearing space with bearings (6) for the shafts (5) of the rotary pistons located in the compression chamber, with the labyrinth seals (12) for the shafts which pass through the dividing wall between the compression chamber and the gearing space and with means of preventing a shortage of oil or oil loss in the gearing space (3) due to gearing space evacuation, *characterised in that* the evacuation device for the gearing space (3) is a separate vacuum pump (14) capable of producing a pressure which is lower than the lowest pressure occurring in the compression chamber of the twin shaft vacuum pump (1) and the inlet to which is directly linked via the pipe (13) with the gearing space (3), in that an oil separation element (25, 35) is fitted in the pipe (13) for the gases flowing through the pipe (13) from the gearing space (3) to the vacuum pump (14) and in that the oil collection space behind the filter of the oil separation device is linked to the gearing space (3) via a pipe (16) for the purpose of returning the separated oil.

2. Pump according to Claim 1, *characterised in that* the oil separation element consists of a filter (25) filled with metal wool (24).

3. Pump according to Claim 1, *characterised in that* the oil separation element (25) consists of a cap-like arrangement (61, 62) located directly against the gearing space (3).

4. Pump according to Claim 3, *characterised in that* the arrangement consists of an annular component (62) and a cap-like component (61), between which a multi-layered wire mesh (63) is clamped as an oil filter.

5. Pump according to one of the preceding Claims, *characterised in that* the oil separation element (25, 35) is fitted with a cooling system (31), preferentially water cooling.

6. Pump according to Claims 4 and 5, *characterised in that* the water cooling system (31) is directed to the cap (61) and the cap (61) is made of a material with good thermal conductivity and the annular section (62) is made of material with poor thermal conductivity.

7. Pump according to Claim 1, *characterised in that* the oil separation element consists of an oil mist filter (35).

8. Pump according to Claim 7, *characterised in that* the pipe (36) used to return the oil emerges beneath the oil level (9) in the gearing space (3) and in that the oil collection space (29) for the oil mist filter (35) is so positioned in relation to the oil level in the gearing space that a return oil flow is assured.

9. Pump according to Claim 7 or 8, *characterised in that* a pressure control valve (37) is fitted after the oil mist filter (35).

10. Pump according to one of the preceding Claims, *characterised in that* there are two gearing spaces which are linked to one another.

11. Twin shaft vacuum pump (1) with a compression chamber (2) and at least one gearing space (3) arranged to the side thereof, containing oil and linked to an evacuation device, with dividing wall (4) between the compression chamber and the gearing space with bearings (6) for the shafts (5) of the rotary pistons located in the compression chamber, with the labyrinth seals (12) for the shafts which pass through the dividing wall between the compression chamber and the gearing space and with means of preventing a shortage of oil or oil loss in the gearing space (3) due to gearing space evacuation, *characterised in that* the evacuation device for the gearing space (3) is a separate oil-sealed vacuum pump (14), the inlet to which is directly linked via the pipe (13) with the gearing space (3), and that the gearing space (3) is connected to the oil supply for the separate vacuum pump (14).

12. Pump according to Claim 11, *characterised in that* a float control (44, 46, 47) is fitted to control the flow of oil from the oil supply of the separate vacuum pump (14) to the gearing space (3).

13. Pump according to Claim 11 or 12, *characterised in that* the separate oil-sealed vacuum pump (14) is fitted with an exhaust filter.

FIG. 1

FIG.2

FIG.2a

EP 0 156 951 B1

FIG.3

FIG.4